Europäisches Patentamt

(19) European Patent Office

Office européen des brevets

(11) Publication number: **0 267 409**
**B1**

(12) **EUROPEAN PATENT SPECIFICATION**

(45) Date of publication of the patent specification:
**25.07.90**

(21) Application number: **87114349.1**

(22) Date of filing: **01.10.87**

(51) Int. Cl.⁵: **B29C 43/20, B29C 31/08,**
**B44F 1/06**
**// B29K1:00, B29K105:32**

(54) Process for producing colour shading effects in the mass of plastic material slabs or sheets.

(30) Priority: **07.10.86 IT 2192486**

(43) Date of publication of application:
**18.05.88 Bulletin 88/20**

(45) Publication of the grant of the patent:
**25.07.90 Bulletin 90/30**

(84) Designated Contracting States:
**AT BE CH DE ES FR GB GR IT LI LU NL SE**

(56) References cited:
**DE-A- 1 679 821**
**DE-A- 1 905 292**
**DE-A- 3 507 655**
**FR-A- 1 377 795**
**FR-A- 2 202 768**
**FR-A- 2 564 772**
**GB-A- 1 096 057**
**NL-C- 29 274**
**US-A- 3 012 901**
**US-A- 3 310 619**
**US-E- 26 237**

(73) Proprietor: **MAZZUCCHELLI CELLULOIDE S.P.A., Via S.e P. Mazzucchelli, 7, I-21043 Castiglione Olona(IT)**

(72) Inventor: **Frontini, Ambrogio, Via Madonnetta, 12, I-22070 Locate Varesino Como(IT)**

(74) Representative: **Faggioni, Glovanmaria, Dr. et al, Fumero-Studio Consulenza Brevetti Widenmayerstrasse 4/I, D-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a process for producing articles of plastic material, particularly slabs designed for the eyeglass industry, consisting of a translucid and/or semitransparent mass with spots or variegated colour effects, having a greater or lesser shading degree of the contours inside the mass of plastic material.

It is known that in the eyeglass industry, as well as in that of toilet products and of gift articles in general, wide use is made of plastic material, usually in the form of slabs with variegated and shaded colouring, tending at times to reproduce the aesthetic features of a material of natural origin. For instance, on slabs having a translucid or semitransparent primary colour, there are formed darker colour spots imitating natural tortoise shell. Usually, one tries to obtain colour effects extending into the mass of plastic material. In fact, the colour effects extending only over the surface of the slabs, which can easily be obtained by various painting and/or printing techniques, are of far less commercial interest.

The concept of obtaining variegated colour effects, by combining differently coloured materials, has been known for a very long time (it will be sufficient to remember the technique of mosaics). This concept has been resumed also in modern times and is adopted in the techniques making use of polymeric materials, particularly in the production of linings for the building industry (pavings and tilings), by using rubbers and/or PVC-based compositions. Examples of such applications are reported also in patent literature: the Patent NL-29274 concerns a paving having a marble effect, obtained from thermosetting resins; Patents GB-1096057 and FR-1337795 equally concern the production of tiles or pavings with variegated pigmentations based on PVC; the Patent US-3012901 concerns a process to improve the surface colouring effect of plastic material objects, by orienting the laminate particles; the Patent DE-3507655 describes a process for the continuous flow production, with compacting obtained through passage between a set of heated and shaped rollers; Patents FR-2202768 and FR-2564772 concern processes for mixing differently coloured plasticized PVC powders, to obtain speckling or staking colour effects; the Patent US-3310619 finally concerns the production of linings by means of variously coloured particles of cross-linked methacrylated copolymer, welded with PVC.

All these patents refer, as already said, to the production of non-transparent objects or materials, in which the variegated colouring effect is thus only superficially perceptible and in which, furthermore, the problem of obtaining colour shading effects is not even taken into account.

The fundamental object of the invention is to actually obtain colour shading effects in semitransparent materials, these colour effects not being superficial, but visible through the mass of the material. Such colour effects are typical in sheets of plasticized cellulose esters, particularly slabs designed for the uses mentioned further above, such as described for example in "Macromolecole - Scienza e Tecnologia" - Various Authors, Ediz. Pacini Pisa - Vol. I, pages 659 and following. Among the techniques of known type, allowing to produce these slabs or similar articles, the following should be remembered:

- "Block system": with this process, which is also the oldest, the material - based on cellulose esters - is initially prepared in the form of strips containing a specific percentage of solvents (for example, from 20 to 30%) and having different colourings. These strips are carefully stacked according to a predetermined pattern, to form a "block". This is subsequently heated and pressed up to obtaining a compact mass, wherein the colour spreads - to form the des    ired shading effect - thanks to the presence of the solvents. Said mass is then cut into sheets, which are sent to the user after a very long seasoning, meant to remove said solvents.

- "Flow systems": with these processes, applied more recently in the extrusion technique, the variegated colouring is obtained by suitable means distributing the flows of differently coloured materials, which undergo a non-homogeneous mixing and a limited interpenetration.

Both these techniques are not exempt from inconveniences and disadvantages, which can be summed up as follows.

For what concerns the "block system", highly qualified personnel is required to form the block. Moreover, the processing times are very long, both for the block forming phase and for the sheet seasoning phase, and additional costs are required for the need to use solvents. But the finished product is of high quality, both for what concerns the colour shading effect and for its mechanical characteristics.

For what concerns instead the "flow systems", it is the other way round. In this case, in fact, the costs involved are considerably lower, the production times are very short and no particularly skilled labour is required; nevertheless, the colour effect - though using the most recent and sophisticated methods for mixing the different flows - clearly suffers from the effects of the flow, whereby the colouring pattern always evidences an elongated shape in the direction of the flow and a rather sharp contour of the differently coloured spots, particularly crosswise to the flow. This makes the artificial origin of the material at once visible, even to a non expert observer, whereby the material itself cannot be suitably used to manufacture high-quality products.

The object of the present invention is therefore to supply a process for the production of slabs or molded pieces - particularly designed for the eyeglass industry - essentially consisting of a transparent, or semitransparent, or translucid thermoplastic material, based on more or less plasticized cellulose derivatives and having colour shading effects in the mass of the material, said process involving low production costs and short production times - as in the case of the aforespecified "flow systems" - but combined with excellent characteristics as far as quality of the colouring effect - for what concerns both the arrangement of the colour spots and the shading effects - such as are obtained with the said "block system".

This result is achieved, with the process according to the invention, by:
- preparing a first mix of thermoplastic material in pieces or granules, to which there is added a first colouring substance, and a second mix of thermoplastic material in pieces or granules, to which there is added a second colouring substance;
- preparing a rough mixture of said first and said second mix in a proportion of 50:50 to 90:10;
- pouring said rough mixture into a mold and heating it under pressure.

Preferably, said mixture is poured into a mold and heated by applying a pressure of not less than 10 kg/cm². The heating temperature depends on the type of plastic material used, on the thickness and on the type of surface finishing of the final product, as well as on the shading effects one wishes to obtain. Generally, the temperature is between 170 and 200°C with a pressure applied for at least 10 minutes, and preferably, at least 20 minutes.

According to the invention, it has in fact surprisingly been discovered that, at the indicated pressures and temperatures, applied for a sufficient length of time, the colours present in the plastic materials tend to spread towards the fraction of less concentration - and this even in the absence of solvents (which were considered indispensable in known technique) - so that the desired colour shading effect in the mass of the material can be obtained.

The aforementioned pressing times are generally sufficient to obtain a visible migration of the colouring substances from one to the other of said first and second plastic material. Since this spreading phenomenon depends, as well as on time, also on the temperature, it is obvious that by carefully choosing these parameters it is possible to obtain a more or less forced spreading effect. These choices will of course also have to take into account an economic conduction of the process.

The basic plastic materials, to be used in the process of the present invention, consist of cellulose esters or ethers, alone or in mixture, as for example:
- acetate, nitrate propionate, cellulose acetate butyrate or acetate propionate;
- ethyl- or methyl-cellulose;
- as well as, eventually, other cellulose derivatives more or less plasticized with plasticizers of the type:
- methyl, ethyl, propyl, butyl, methoxyethyl phthalates;
- azelates,
- sebacates,
- glyceride triacetate;
- terpenes.

In particular, the process according to the invention is perfectly suited for processing mixes of:
- 65-75 parts by weight of cellulose acetate (acetic acid titre from 52.5 to 55.5% - viscosity index from 120 to 180, according to the ISO R-1597 and R-1155 methods);
- 25-35 parts by weight of diethyl phthalate.

The choice of the colouring substances is limited to products having a sufficient dispersion coefficient in the processing conditions and being provided with the required colorimetric characteristics, and with the characteristics of permanence and of compatibility with the thermoplastic material used and, generally, with the conditions of processing and of use.

For instance, the following compounds have proved to be suited for use as colouring substances in plasticized cellulose acetate:
- Solvent Yellow 95
- Solvent Yellow 33
- Solvent Orange 86
- Disperse Orange 47
- Solvent Brown 1
- Solvent Yellow 14
- Solvent Red 111
- Disperse Red 60
- Solvent Red 52
- Solvent Violet 11
- Solvent Violet 36
- Solvent Violet 13
- Solvent Blue 21

Other non-dispersing dyes and pigments can be added to obtain special colours and effects, as for example:
- Solvent Brown 34
- Solvent Blue 10
- Solvent Orange 41
- Zinc White
- Titanium Dioxide
- Carbon Black

The two mixes consisting of said first and second plastic material, respectively coloured already, are prepared in the physical shape suited to obtain the desired colouring effect, that is, for example:
- granules obtained by extrusion;
- pieces of various size (for instance, material in pieces coming from chips);
- crushing products;
- plasticized powder.

The sizes of these pieces or granules preferably vary between 3 and 30 mm, but even different sizes can obviously be chosen, always in relation to the desired colouring effect and taking into account the limitations imposed by the dimensions of the mold.

Also the mixing proportions of the pieces or granules of the first and, respectively, of the second coloured plastic material are chosen in relation to the desired colouring effect. The mixture of pieces or granules of the two materials is dried, to eliminate any possible humidity, and introduced into the cavity of a mold which is positioned between two tables of a press.

Subsequently, the press is closed and the material is brought to the temperature at which the mixture appears in a pasty state. This temperature condition is kept for the time required to obtain a compact mass, without cavities.

The product obtained is subsequently cooled and subjected to possible finishing processes, such as trimming, planing, and so on. It is interesting to note that the process according to the invention allows to obtain - by merely using an essentially flat mold - a finished product in the form of a slab, which is particularly useful for subsequent use in the eyeglass industry.

The material shows, as it comes out of the press, characteristics of colour and of design which cannot be obtained with the known type extrusion or molding processes, but having identical mechanical characteristics.

The most varied effects can be obtained by varying the percentage of the components, the size of the granules and/or their physical shape, the shape of the molds, or by using other starting products.

There follows a descriptive, but non-limiting, example of the process according to the present invention.

Two mixes of different colour, light brown and dark brown, in the form of cylindrical granules having dimensions of 3 × 3 mm, were prepared by extrusion (the technique of mixing by extrusion is well known).

The composition of the mixes was as follows:
- Cellulose acetate 72% (acetic acid titre: 53.2%; viscosity index: 150),
- Ethyl phthalate 28%.

The colouring substances used were the following:
- Light mix:
0.060 gr/Kg of Solvent Yellow 95
0.020 gr/Kg of Solvent Yellow 14
- Dark mix:
0.125 gr/Kg of Solvent Yellow 95
0.075 gr/Kg of Solvent Yellow 14
0.024 gr/Kg of Solvent Blue 21
0.024 gr/Kg of Disperse Red 60.

The two mixes, forming said first and said second plastic material, were subsequently mixed in the following proportions:
- Light granules 65%,
- Dark granules 35%.

930 gr of the final mixture were placed into a flat mold having dimensions of 30 × 30 cm, in order to obtain a final thickness of the slab of approximately 8 mm.

A cover was positioned on the mold and the whole was arranged on the table of a workshop press.

The press was closed, by applying a pressure of 40 Kg/cm2, and brought by steam heating to a temperature of approximately 180°C. After twenty minutes of heating at a steady temperature, the material was water-cooled. The cooling required approximately thirty minutes.

Said operation allowed to obtain a product fully similar to the known quality slabs obtained with the cited "block system", but reducing the technical time of production from two months to one day of work.

Said product has physical-mechanical characteristics which can be compared to those of the products obtained with the "block system", as shown in the following table.

Physical-mechanical characteristics

| CELLULOSE ACETATE | | | |
|---|---|---|---|
| | Block Material | Extruded Material | Material obtained by invention |
| Elasticity modulus MPA | 1600 | 1690 | 1700 |
| Impact resistance (IZOD) kJ/m$^2$ | 4.0 | 5.2 | 4.5 |
| Vicat softening point °C | 82 | 85 | 85 |
| Rockwell hardness A scale R | 96 | 102 | 96 |

**Claims**

1) Process for the production of slabs or molded pieces, essentially consisting of a transparent, or semitransparent, or translucid thermoplastic material based on more or less plasticized cellulose derivatives and having colour shading effects in the mass of the material, characterized in that:
- a first mix of thermoplastic material is prepared, in pieces or granules, to which there is added a first colouring substance, and a second mix of thermoplastic material is prepared, in pieces or granules, to which there is added a second colouring substance;
- a rough mixture of said first and said second mixes is prepared in a proportion of 50:50 to 90:10 parts by weight; and
- said rough mixture is poured into a mold and heated under pressure.
2) Process as in claim 1, wherein said pressure is of not less than 10 kg/cm$^2$ and is applied for at least 10 minutes.
3) Process as in claim 1, wherein said pressure is applied for at least 20 minutes.
4) Process as in claim 1, wherein the pressure mold is heated at a temperature of 160 to 200°C.
5) Process as in claim 1, wherein said first and/or said second mix of thermoplastic material each consist of cellulose esters or ethers, or mixtures thereof, chosen from the group of: acetate, nitrate propionate, cellulose acetate butyrate or acetate propionate, ethyl- or methyl-cellulose.
6) Process as in claim 1, wherein said first and/or said second mix of thermoplastic material each consist of a mixture of 72 parts by weight of cellulose acetate and 28 parts by weight of diethyl phthalate.
7) Process as in claim 1, wherein said first and/or said second mix appear in the form of powder, granules and/or pieces of dimensions included between 3 and 30 mm.
8) Process as in claim 1, wherein said first mix is given a light brown colour and said second mix is given a dark brown colour, and said mixes are introduced in the mold in the proportion of 65 to 35 parts by weight.

**Revendications**

1. Procédé de fabrication de plaques ou de pièces moulées, consistant essentiellement en matière thermoplastique transparente, semi-transparente ou translucide, à base de dérivés cellulosiques plus ou moins plastifiés et présentant des nuances de couleur dans la masse de la matière, caractérisé en ce que:
—on prépare un premier mélange de matière thermoplastique, sous forme de morceaux ou de granules, auquel on ajoute une première substance colorante, et un second mélange de matière thermoplastique, sous forme de morceaux ou de granules, auquel on ajoute une seconde matière colorante;
—on prépare un mélange grossier desdits premier et second mélanges en une proportion allant de 50:50 à 90:10 en poids; et
—on verse ledit mélange grossier dans un moule et on le chauffe sous pression.
2. Procédé selon la revendication 1, caractérisé en ce que ladite pression n'est pas inférieure à 10 kg/cm$^2$ et est appliquée pendant au moins 10 minutes.
3. Procédé selon la revendication 1, caractérisé en ce que ladite pression est appliquée pendant au moins 20 minutes.
4. Procédé selon la revendication 1, caractérisé en ce que le moule à pression est chauffé à une température de 160 à 200°C.
5. Procédé selon la revendication 1, caractérisé en ce que ledit premier et/ou ledit second mélange de matière thermoplastique consistent chacun en esters ou éthers de cellulose, ou leurs mélanges, choisis dans le groupe comprenant: l'acétate, le nitrate propionate, l'acétate butyrate ou l'acétate propionate de cellulose, l'éthyl- ou la méthyl-cellulose.

6. Procédé selon la revendication 1, caractérisé en ce que ledit premier et/ou ledit second mélange de matière thermoplastique consistent chacun en un mélange de matière thermoplastique consistent chacun en un mélange de 72 parties en poids d'acétate de cellulose et 28 parties en poids de phtalate de diéthyle.

7. Procédé selon la revendication 1, caractérisé en ce que ledit premier et/ou ledit second mélange se présente(nt) sous la forme de poudre, granules et/ou de morceaux de dimensions entre 3 et 30 mm.

8. Procédé selon la revendication 1, caractérisé en ce que l'on donne audit premier mélange une couleur brun-clair et audit second mélange une couleur brun-foncé et on introduit lesdits mélanges dans le moule dans une proportion de 65 à 35 parties en poids.

## Patentansprüche

1. Verfahren zum Herstellen von Platten oder Preßteilen, im wesentlichen bestehend aus einem transparenten oder halb-transparenten oder lichtdurchlässigen thermoplastischem Material auf der Grundlage von mehr oder weniger plastizierten Zellulosederivaten und mit Farbschattierungseffekten in der Masse des Materials, dadurch gekennzeichnet, daß:

— ein erstes Gemisch aus thermoplastischem Material hergestellt wird, in Stücken oder Körnern, zu der ein erster Farbstoff hinzugefügt wird, und ein zweites Gemisch thermoplastischen Materials hergestellt wird, in Stücken oder Körnern, zu der ein zweiter Farbstoff hinzugefügt wird;

— eine Grobmischung aus dem ersten und dem zweiten Gemisch im Gewichtsverhältnis von 50:50 bis 90:10 hergestellt wird; und

— die Grobmischung in eine Form gegossen und unter Druck erhitzt wird.

2. Verfahren nach Anspruch 1, bei dem der Druck nicht geringer als 10 kg/cm² ist und für wenigstens 10 Minuten ausgeübt wird.

3. Verfahren nach Anspruch 1, bei dem der Druck für wenigstens 20 Minuten ausgeübt wird.

4. Verfahren nach Anspruch 1, bei dem die Druckform bei einer Temperatur von 160 bis 200°C erhitzt wird.

5. Verfahren nach Anspruch 1, bei dem das erste und/oder zweite Gemisch thermoplastischen Materials jeweils aus Zelluloseestern oder -äthern oder Mischungen daraus besteht, ausgewählt aus der Gruppe der Acetate, Nitratproprionate, Zellulose-Acetat-Butyrate oder -Acetat-Proprionate, Äthyl- oder Methylzellulose.

6. Verfahren nach Anspruch 1, bei dem das erste und/oder zweite Gemisch thermoplastischen Materials jeweils aus einer Mischung von 72 Gewichtsteilen Zelluloseacetat und 28 Gewichtsteilen Diäthyl-Phtalat besteht.

7. Verfahren nach Anspruch 1, bei dem das erste und/oder zweite Gemisch in Form von Pulver, Körnern und/oder Stücken der Dimension zwischen einschließlich 3 und 30 mm auftritt.

8. Verfahren nach Anspruch 1, bei dem dem ersten Gemisch eine hellbraune Farbe gegeben wird und dem zweiten Gemisch eine dunkelbraune Farbe gegeben wird und die Mischung in die Form im Verhältnis von 65 zu 35 Gewichtsteilen eingefüllt wird.